# NEUE EUROPÄISCHE PATENTSCHRIFT

(11) **EP 0 675 084 B2**
(45) Veröffentlichungstag und Bekanntmachung des Hinweises auf die Entscheidung über den Einspruch: **11.09.2002**
(45) Hinweis auf die Patenterteilung: 24.09.1997
(21) Anmeldenummer: 95102459.5
(22) Anmeldetag: 22.02.1995
(51) Int. Cl.: C03C 8/14, C03C 17/00, C03C 17/06

(54) **Verfahren und Mittel zur Herstellung von purpurfarbenen Dekoren**
Method and means for the production of purple-coloured decorations
Procédé et moyen de production de décorations colorées pourpres

(30) Priorität: 30.03.1994 DE 4411103
(43) Veröffentlichungstag der Anmeldung: 04.10.1995
(73) Patentinhaber: Ferro GmbH, 60327 Frankfurt (DE)
(72) Erfinder: Dorbath, Bernd, Dr., D-63755 Alzenau (DE); Giesecke, Norbert, D-63486 Bruchköbel (DE); Fritsche, Klaus-Dieter, Dr., D-04680 Colditz (DE)
(74) Vertreter: Reinhardt, Markus, Dipl.-Ing.

(56) Entgegenhaltungen:
- EP-A- 0 501 139
- DD-A- 281 802
- DD-B- 145 163
- DE-A- 4 106 520
- GB-A- 2 216 536
- PATENT ABSTRACTS OF JAPAN vol. 7 no. 131 (C-169) ,8.Juni 1983 & JP-A-58 045137 (OKUNO SEIYAKU ) 16.März 1983,
- W.Lehnhäuser, Glasuren und ihre Farben, 3.Auflage, Wilhelm Knapp Verlag, 1973, S. 151, 2.Absatz

## Beschreibung

Die Erfindung richtet sich auf ein Verfahren und Mittel zur Herstellung von purpurfarbenen Dekoren, wobei die Purpurfarbe auf kolloidalem Gold beruht. Zur Dekorherstellung wird ein Mittel, enthaltend einen feinteiligen Glasfluß und eine Goldverbindung, auf das zu dekorierende Substrat aufgebracht und bei 400 bis 1050 °C eingebrannt; die Purpurfarbe bildet sich während des Brandes.

Purpurpigmente auf der Basis von keramischen Materialien und kolloidalem Gold sind auf unterschiedliche Weise zugänglich und finden schon lange Verwendung zur Erzeugung purpurfarbener Dekore auf einbrennfähigen Substraten, wie insbesondere Glas, Porzellan und Keramik.

Bis vor kurzem umfaßte die Herstellung von Purpurpigmenten mehrere Prozeßstufen: (a) Ausfällung von gelförmigem Cassius'schem Goldpurpur aus wäßrigen Goldsalzlösungen mittels Reduktionsmitteln, meist Zinn(II)salzen, (b) Aufmischen des feuchten Goldpurpurs mit feingemahlenem Glas, (c) Vorsintern des Gemischs bei 600 bis 800 °C, wobei die Goldpartikel zumindest teilweise von Glas umhüllt werden, und (d) Feinmahlung des gesinterten Materials. Die DE 41 06 520 lehrt ein vereinfachtes Verfahren zur Herstellung derartiger Purpurpigmente: Hierbei wird eine sehr feinteilige Glasfritte in wäßriger Suspension, welche eine wasserlösliche Goldverbindung enthält, durch Zugabe eines Reduktionsmittels unmittelbar mit kollodialem Gold beschichtet. Der Herstellung von purpurfarbenen Dekoren war somit bisher die Herstellung eines Purpurpigments, die mindestens einen chemischen Reaktionsschritt und einen Trocknungsprozeß umfaßte, vorgeschaltet.

Gemäß DE-PS 32 29 837 lassen sich mit Metalloxiden beschichtete plättchenförmige Teilchen auch durch Beschichten unter Verwendung von in organischen Lösungsmitteln gelösten organischen Goldresinaten und Brennen bei 600 °C in kirschrote Pigmente überführen. Diesem Dokument läßt sich nicht entnehmen, anstelle plättchenförmiger Teilchen einen Glasfluß, wie Glasfritten, und anstelle organischer Goldresinate andere Goldverbindungen oder wäßrige Goldsalzlösungen zur Pigmentbildung zu verwenden oder gar die Pigmentbildung in situ während des Dekorbrandes durchzuführen.

Die GB-A 2 174 383 lehrt ein Verfahren zur Herstellung von Dekoren auf Glas unter Verwendung eines Abziehbilds, wobei die Dekorschicht des Abziehbilds eine bleihaltige Glasfritte, ein farbgebendes Metalloxid und ein Druckmedium enthält. Unter den Metalloxiden wird auch Goldoxid genannt, wobei ein Goldoxid enthaltendes Email eine Rubinfarbe aufweist. Diesem Dokument läßt sich keine Anregung dafür entnehmen, in der Dekorschicht des Abziehbilds anstelle des Goldoxids eine andere Goldverbindung einzusetzen. Das Dokument vermittelt auch keine Lehre zur Herstellung von purpurfarbenen Dekoren.

Aus der DE-PS 38 07 290 ist ein Dekorpräparat bekannt, das eine Goldverbindung enthält: Hier handelt es sich um ein Polyvinylpyrrolidon und Wasser enthaltendes Poliergoldpräparat, das 10 bis 40 Gew.-% Gold als Goldpulver und/oder schwerlösliche Goldverbindung enthält; als Goldverbindungen werden Goldmercaptide und Goldsulfide genannt. Die unter Verwendung derartiger Präparate erhältlichen Dekore weisen eine Goldfarbe, aber keine Purpurfarbe auf.

Die Aufgabe der vorliegenden Erfindung besteht darin, ein Verfahren und ein zur Durchführung desselben geeignetes Mittel aufzuzeigen, womit in einfacher Weise purpurfarbene Dekore auf einbrennfähigen Substraten hergestellt werden können. Das Verfahren zur Dekorherstellung soll die bisher erforderliche vorgeschaltete separate Herstellung des Purpurpigments überflüssig machen. Eine weitere Aufgabe besteht darin, Wege aufzuzeigen, das Dekorationsverfahren so auszugestalten, daß damit Dekore mit unterschiedlichem Purpurfarbton, also mehr blaustichig oder mehr rotstichtig, erhältlich sind. Eine weitere Aufgabe der Erfindung besteht darin, das Verfahren so variabel zu gestalten, daß damit hochwertige, also insbesondere festhaftende, abplatzsichere und rißfreie Dekore auf unterschiedlichsten Materialien erhalten werden können.

Die Aufgabe wird gelöst durch ein Verfahren zur Herstellung von purpurfarbenen Dekoren auf einbrennfähigen Substraten, umfassend Aufbringen eines mindestens eine Goldverbindung und einen feinteiligen Glasfluß enthaltenen Mittels auf das zu dekorierende Substrat und Brand des mit dem Mittel versehenen Substrats bei 400 bis 1050 °C, das dadurch gekennzeichnet ist, daß das zum Aufbringen zu verwendende Mittel mindestens eine beim Brand zu kolloidalem Gold zersetzliche Goldverbindung, ausgenommen Goldoxid, enthält und das Gewichtsverhältnis von Gold in der Goldverbindung zu Glasfluß zwischen 1 zu 10 und 1 zu 2000 liegt.

Die weiteren Ansprüche richten sich auf bevorzugte Ausführungsformen des Verfahrens und die hierfür einzusetzenden Mittel, um den speziellen Aufgaben gerecht zu werden.

Erfindungsgemäß wird zur Herstellung des Dekors kein purpurfarbenes Pigment eingesetzt, sondern dieses wird aus geeigneten Rohstoffen, nämlich einem Glasfluß und einer zersetzlichen Goldverbindung, welche in geeigneter Weise im Rahmen des Dekorationsverfahrens auf das Substrat aufgebracht werden, in situ gebildet. Da es sich bei den genannten Pigmentrohstoffen um solche handelt, wie sie in bekannten Verfahren zur Herstellung von Purpurpigmenten zur Anwendung kamen, zeichnet sich das erfindungsgemäße Verfahren dadurch aus, daß auf eine separate Pigmentherstellung verzichtet wird. Durch das erfindungsgemäße Verfahren ist es auch möglich, durch die Auswahl der zu verwendenden Goldverbindungen und Glasflüsse bei gegebenem Goldgehalt im Dekor unterschiedliche Purpurfarbtöne zu erhalten. Die Farbtöne lassen sich zusätzlich durch Mitverwendung von farbtonverändernden Zusatzstoffen in den auf das Substrat aufzubringenden Mitteln in gewünschter Weise beeinflussen. Die Auswahlmöglichkeit des Glasflusses, bevorzugt werden feinpulvrige Glastritten, erlaubt es, das herzustellende Dekor den physikalischen Eigenschaften des zu dekorierenden Substrats optimal anzupassen, woraus ästhetische Dekore mit hohem Gebrauchswert resultieren.

Unter den zu den dekorierenden einbrennfähigen Substraten werden solche verstanden, welche bei der zum Brand erforderlichen Temperatur ausreichend formstabil sind oder in gezielter Weise, etwa im Rahmen der Formgebung von Glasscheiben, verformt werden. Besonders geeignete Substrate sind somit Glas und Porzellan sowie keramische Materialien, wie Steinzeug und Steingut. In einzelnen Fällen können auch Substrate in Form ihres Grünkörpers mit einem Glasfluß und Goldverbindung enthaltenden erfindungsgemäßen Mittel dekoriert und daran anschließend fertiggebrannt werden, wobei gleichzeitig das purpurfarbene Dekor ausgebildet wird. Anwendbar ist das Verfahren auch zur Dekorierung ausreichend thermisch stabiler metallischer Substrate, etwa im Rahmen einer Emailierung unter Verwendung eines erfindungsgemäßen Mittels.

Unter Glasfluß werden solche Stoffzusammensetzungen verstanden, welche unter den Einbrennbedingungen eine Glasschicht ausbilden. Bei den bevorzugten Glasflüssen handelt es sich um sogenannte Glasfritten, also Gläser, welche nach dem Erschmelzen abgeschreckt und aufgemahlen wurden. Auch Gemische ans Glasfritten und darin beim Brand löslichen oxidischen und/oder silikatischen Zusatzstoffen können als Glasfluß eingesetzt werden. Bekanntlich verfügt die Fachwelt über ein bezüglich der chemischen Zuammensetzung sehr breites Spektrum an Glasfritten. Solche Glasfritten unterscheiden sich auch bezüglich ihrer physikalischen Eigenschaften, etwa ihrem Erweichungs- und Schmelzverhalten und ihrem Ausdehnungskoeffizienten α. Im erfindungsgemäßen Verfahren lassen sich transparente oder getrübte, farblose oder durch färbende Oxide gefärbte Glasfritten einsetzen. Während im eingangs gewürdigten vorbekannten Verfahren zur Herstellung rubinroter Dekore unter Verwendung von Goldoxid der Einsatz bleihaltiger Glasfritten für erforderlich gehalten wurde, läßt sich das erfindungsgemäße Verfahren auch sehr gut unter Verwendung bleifreier Glasfritten, wie sie im Handel erhältlich sind und in zahlreichen Dokumenten beschrieben wurden, realisieren. Der Erweichungsbeginn von Glasfritten, wie sie zur Dekoration von Glas eingesetzt werden müssen, liegt im allgemeinen zwischen 450 und 600 °C, wohingegen der Erweichungspunkt von Glasfritten für die Dekoration von keramischen Materialien und Porzellan vorzugsweise zwischen 550 und 700 °C liegt. Es hat sich als vorteilhaft erwiesen, wenn der mittlere Teilchendurchmesser des zu verwendenden Glasflusses zwischen 0,5 und 50 µm, vorzugsweise zwischen 1 und 20 µm und insbesondere zwischen 1 und 10 µm, liegt. Zur Erzeugung besonders feiner konturenscharfer Dekore werden besonders feinteilige Glasfritten verwendet.

Im erfindungsgemäßen Verfahren lassen sich solche organischen oder anorganischen Goldverbindungen einsetzen, welche in Gegenwart des feinteiligen Glasflusses während des Aufheizens auf die eigentliche Brenntemperatur vollständig zu kolloidalem Gold zersetzt werden. Die Zersetzungstemperatur bevorzugter Goldverbindungen liegt meistens unterhalb 300 °C, vorzugsweise zwischen 150 und 250 °C. Einsetzbar sind sowohl anorganische als auch organische Goldverbindungen: es kann sich hierbei um in Wasser oder in organischen Lösungsmittelsystemen lösliche oder schwer lösliche Goldverbindungen handeln. Die im erfindungsgemäßen Verfahren zu verwendenden Mittel enthalten eine oder mehrere Goldverbindungen, insbesondere solche aus der Reihe Lithium-, Natrium- und Kaliumdicyanoaurat(I), Goldcyanid, Tetrahalogengoldsäure, insbesondere Tetrachlorogoldsäure und Hydrate davon, Lithium-, Natrium-, und Kaliumdisulfitoaurat(I), Gold(III)sulfid, Gold(I)thiolate und Gold(I)aminkomplexe. Obgleich Goldthiolate und Goldaminkomplexe, wie sie in Glanzgold- und Poliergoldpräparaten Einsatz finden - siehe beispielsweise EP-A 0 514 073 - werden im erfindungsgemäßen Verfahren im Handel leicht erhältliche anorganische Goldverbindungen, wie insbesondere Tetrachlorogoldsäure und Hydrate davon, Kaliumdicyanoaurat, Kaliumdisulfitoaurat, Goldcyanid und Goldsulfid besonders bevorzugt.

Ein wesentliches Merkmal des Verfahrens besteht darin, daß in dem zur Dekorbildung aufzubringenden Mittel das Gewichtsverhältnis von Gold in Form einer oder mehrerer Goldverbindungen zum Glasfluß zwischen 1 zu 10 und 1 zu 2000 liegt; vorzugsweise liegt das Verhältnis zwischen 1 zu 20 und 1 zu 200 und inbesondere zwischen 1 zu 30 und 1 zu 100.

Gemäß des Verfahrens wird ein Mittel verwendet, in welchem sich die zersetzliche Goldverbindung im wesentlichen in an dem Glasfluß adsorbierter Form befindet. Ein solches Mittel läßt sich in einfacher Weise herstellen, indem der feinteilige Glasfluß mit einer oder mehreren pulverförmigen zersetzlichen Goldverbindungen intensiv gemischt wird. Besonders zweckmäßig ist es, die pulverförmigen Bestandteile durch eine intensive Mahlung, vorzugsweise in einer Kugelmühle, in ein homogenes Produkt zu überführen. Anstelle der sehr einfachen, aber wirksamen trockenen Vermahlung der wesentlichen Bestandteile bevorzugter erfindungsgemäßer Mittel ist es auch möglich, die Goldverbindung(en) in Form einer wäßrigen, wäßrig-organischen oder organischen Lösung mit dem Glasfluß zu mischen, wobei die Goldverbindungen auf den Glasfluß aufziehen. Das so erhaltene Produkt kann unmittelbar oder nach Trocknung als Mittel oder wesentlicher Bestandteil eines solchen im erfindungsgemäßen Verfahren zur Anwendung gelangen.

Bei der vorgenannten trockenen oder feuchten Herstellung des Mittels lassen sich gleichzeitig ein oder mehrere farbtonmodizifierende anorganische und/oder organische Stoffe in wirksamer Menge einarbeiten. Bei den farbtonmodifizierenden Stoffen handelt es sich insbesondere um Verbindungen von Silber, Kupfer, Kobalt, Nickel, Zinn, Ruthenium, Rhodium, Palladium, Osmium, Iridium und Platin. Verbindungen von Silber, wie Silbernitrat, Silbercarbonat, Silberoxalat und Silbertartrat werden bevorzugt; die Anwesenheit von Silberverbindungen in den Mitteln führt zu einer Verschiebung des Purpurfarbtons nach Rot. Eine Blauverschiebung des Purpurs und gleichzeitige Intensivierung der Brillanz des Dekors läßt sich beispielsweise durch Verwendung von Co-Verbindungen erzielen. Die Einsatzmenge an Metallen derartiger farbtonmodifizierender Verbindungen liegt im allgemeinen zwischen 1 und 10 Gew.-%, bezogen auf Gold. Eine Blauverschiebung des Purpurfarbtons läßt sich auch dadurch erzielen, daß als Glasfluß eine kobaltgefärbte Glasfritte oder eine farblose Titandioxid oder Ceroxid enthaltende Glasfritte als Glasfluß eingesetzt wird. Durch Zugabe von Titandioxid oder Ceroxid (Ce₂O₃ und/oder CeO₂) während oder nach der zuvor beschriebenen Herstellung des erfindungsgemäßen Mittels läßt sich gleichfalls eine Blauverschiebung des Purpurfarbtons erzielen.

Es wurde ferner festgestellt, daß sich der während des Dekorbrands ausbildende Purpurfarbton auch durch die Anwesenheit bestimmter organischer Verbindungen modifizieren läßt: Beispielsweise läßt sich ein blaustichiger Purpurfarbton erhalten, wenn das bei der Dekorherstellung eingesetzte Mittel eine niedermolekulare organische Verbindung, insbesondere ein Monooder Disaccharid enthält; eine Rotverschiebung läßt sich durch hochmolekulare Zusatzstoffe, insbesondere Polysaccharide, darunter Pektine, insbesondere Gummiarabicum, erzielen. Die Einsatzmenge der organischen farbtonmodifizierenden Stoffe kann in weiten Bereichen liegen. Die wirksame Einsatzmenge der organischen farbtonmodifizierenden Stoffe wird der Fachmann durch orientierende Versuche, welche er ohnehin zwecks Auswahl und Eignung des einzusetzenden Glasflusses und der Goldverbindung(en) durchführen wird, ermitteln. Üblicherweise liegt die Einsatzmenge der organischen farbtonmodifizierenden Stoffe zwischen 10 und 500 Gew.-%, bezogen auf die Goldverbindung(en). Auch die farbtonmodifizierenden organischen Stoffe lassen sich bei der vorgenannten trockenen oder nassen Herstellung des Mittels als Bestandteil zusetzen. Sofern Glasfluß und Goldverbindung(en) enthaltende erfindungsgemäße Mittel Wasser enthalten, dürfen gleichzeitig keine wasserlöslichen Reduktionsmittel anwesend sein.

Erfindungsgemäße Mittel können zusätzlich ein flüssiges Medium enthalten, wenn das Mittel eine druck-, pinsel-, sprüh- oder tauchfähige Konsistenz aufweisen soll. Bei dem flüssigen Medium kann es sich um ein wäßriges, wäßrigorganisches oder organisches Lösungsmittelsystem handeln, worin die Goldverbindung(en) und, soweit anwesend, weitere Hilfsstoffe löslich oder unlöslich sind. Unter den organischen Lösungsmitteln für wasserfreie Mittel sind insbesondere Terpenkohlenwasserstoffe, Isoparaffine, ferner Ester, Ketone udn Alkohole zu nennen. Vorzugsweise ist das Medium wäßrig oder wäßrig-organisch, wobei als organische Lösungsmittel insbesondere wasserlösliche Alkohole, Ether und Ester in Frage kommen. Besonders bevorzugt finden Glykole mit 2 bis 4 C-Atomen sowie Oligo- und Poly(C₂- bis C₄)-glykole oder Mono(C₁- bis C₄)-alkylether der genannten Glykole oder Oligoglykole Verwendung, ferner Hydroxycarbonsäuren oder niedere Alkylester derselben, wie insbesondere C₁- bis C₃alkyllactat.

Das flüssige Medium erfindungsgemäßer flüssiger bis pastöser Mittel enthält zusätzlich zu einem Lösungsmittelsystem ein oder mehrere polymere organische Bindemittel. Das/die Bindemittel sind in dem Lösungsmittelsystem löslich oder darin dispergiert. Die Anwesenheit eines oder mehrerer Bindemittel in erfindungsgemäßen Mitteln ist insbesondere dann vorteilhaft, wenn das Mittel mittels üblicher direkter und indirekter Druckverfahren, insbesondere Siebdruckverfahren, auf das zu dekorierende Substrat aufgebracht werden soll. Zweckmäßige Bindemittel sind Polyacrylate, Polymethacrylate, Polyacrylsäure, Polymethacrylsäure, Polyvinylpyrrolidon, Celluloseether, insbesondere Carboxyalkyl- und Hydroxyalkyl-cellulose, Polyalkylenglykol, Polyvinylacetat, Polyvinylalkohol, Polyamine, Alkydharze und Polyurethanharze Die Bindemittel können in Form von Homopolymeren oder Copolymeren oder Blockpolymeren, jeweils einzeln oder in Form von Gemischen zur Anwendung gelangen. Besonders bevorzugt für rein wäßrige Präparate oder solche mit hohem Wassergehalt eignen sich Harze auf der Basis von Polyvinylpyrrolidon-homo oder -copolymeren, Polymethacrylsäure-homo oder -copolymeren sowie von Celluloseethern.

Erfindungsgemäße Mittel, insbesondere solche mit flüssiger oder pastöser Konsistenz können zusätzlich übliche Verarbeitungshilfsstoffe enthalten, insbesondere anionische, kationische, zwitterionische oder vorzugsweise nicht-ionische Tenside in wirksamer Menge, meist 0,01 bis 5 Gew.-%, insbesondere 0,1 bis 2 Gew.-%, bezogen auf das Mittel. Besonders zweckmäßig ist die Anwesenheit eines nicht-ionogenen Netzmittels, um ein zu rasches Absetzen der im erfindungsgemäßen Mittel suspendierten Feststoffe zu vermeiden. Außer Netzmitteln können auch weitere Tenside zur Veränderung der rheologischen Eigenschaften der Mittel anwesend sein. Im Falle der Verwendung eines oxidativ oder UV-härtbaren Harzes müssen zusätzlich Härtungsbeschleuniger zugegen sein. Die genannten Hilfsstoffe werden jeweils in wirksamer Menge eingesetzt.

Da erfindungsgemäße Mittel nicht das Purpurpigment, sondern nur die während des Dekorbrands zu seiner Bildung erforderlichen Rohstoffe enthalten, sind sie, sofern keine gefärbte Glasfritte zum Einsatz kommt, im wesentlichen farblos. Während der Applikation des Mittels besteht somit das Problem, daß das Aussehen des Dekors vor dem Brand nicht beurteilt werden kann. Um dieses Problem zu beheben und damit auch eine manuelle Auftragung eines Dekors zu ermöglichen und mögliche Fehler im Rahmen von beispielsweise Mehrfarbendrucken vor dem Brand feststellen zu können, hat es sich als sehr zweckmäßig erwiesen, den erfindungsgemäßen Mitteln, welche eine pulverförmige oder in Anwesenheit eines Mediums eine druck-, sprüh- oder mahlfähige Konsistenz aufweisen, durch Zugabe eines organischen Farbstoffs eine Eigenfarbe zu verleihen. Bei dem organischen Farbstoff, der dem Mittel in wirksamer Menge zugesetzt wird, kann es sich um einen beliebigen pigmentförmigen oder im Medium löslichen organischen Farbstoff handeln. Der Fachmann wird einen solchen Farbstoff auswählen, der während des Brandes bzw. des Aufheizens auf Brenntemperatur vollständig verbrennt.

Erfindungsgemäße Mittel mit einem Gehalt an flüssigem Medium, enthalten, je nach gewünschter Applikationsart, im allgemeinen zwischen 10 und 90 Gew.-% der für die Pigmentbildung notwendigen Rohstoffe Glasfluß und Goldverbindung(en). Sofern das flüssige Medium des Mittels außer einem oder mehreren Lösungs- bzw. Suspensionsmitteln auch ein oder mehrere organische Bindemittel enthält, liegt der Gehalt an Glasfluß und Goldverbindung(en) zusammen meist unter 85 Gew.-%. Dem Fachmann ist bekannt, daß die erforderliche Verarbeitungsviskosität einer Paste in erheblichem Umfang von der Feinteiligkeit des Glasflusses, der Art der Lösungs- bzw. Suspensionsmittel und der Menge und Verdickungswirkung anwesender Bindemittel abhängt. Sofern die Mittel ein oder mehrere organische Bindemittel enthalten, liegt der Bindemittelgehalt üblicherweise zwischen 0,1 und 30 Gew.-%, meist zwischen 1 und 15 Gew.-%. Der Fachmann wird somit die für seinen Anwendungsfall gewünschten Eigenschaften des Mittels durch orientierende Versuche ermitteln.

Erfindungsgemäße Mittel, welche kein flüssiges Medium enthalten, also pulverförmig sind, lassen sich mittels in der Keramikbranche bekannter Pulvertechnologien unmittelbar auf das zu dekorierende Substrat auftragen, beispielsweise durch Aufpudern auf ein trokkenes oder ein zuvor befeuchtetes Substrat, wobei die Befeuchtung ein nasser Glasurschichtauftrag sein kann. Möglich ist auch, die erfindungsgemäßen pulverförmigen Mittel durch elektrostatischen Pulverauftrag auf die zu dekorierende Fläche aufzubringen.

Der Auftrag pastenförmiger oder anderweitig flüssiger erfindungsgemäßer Mittel auf das zu dekorierende Substrat wird mittels allgemein üblicher Methoden, etwa durch Bemalen, Besprühen oder Bedrucken mittels direkter oder indirekter Druckverfahren erfolgen. Nach dem Verdunsten anwesender Lösungsmittel und, sofern erforderlich, Vernetzen anwesender Bindemittel schließt sich, sofern nicht im Rahmen weiterer Dekorationsmaßnahmen zuvor noch andersartige Dekorpräparate auf das Substrat aufgebracht werden, der eigentliche Dekorbrand an.

Eine in der keramischen Industrie übliche Dekorationstechnik besteht auch in der Verwendung von Abziehbildern. Demgemäß lassen sich die erfindungsgemäßen Mittel auch in Form von Abziehbildern auf das zu dekorierende Substrat auftragen. Das Abziehbild umfaßt in diesem Fall einen Träger, eine wasserlösliche Trennschicht oder Thermotrennschicht, eine Dekorschicht, welche ein erfindungsgemäßes Mittel enthält und eine Filmschicht. Die in der genannten Reihenfolge angeordneten Schichten werden in bekannter Weise hergestellt. Die Herstellung der Dekorschicht erfolgt üblicherweise mittels Siebdruckverfahren, wobei ein Medium enthaltendes erfindungsgemäßes Mittel zum Einsatz kommt. Nach dem Trocknen der Dekorschicht enthält diese einen feinpulvrigen Glasfluß, vorzugsweise eine Glasfritte, mindestens eine zersetzliche Goldverbindung, ausgenommen Goldoxid, und im allgemeinen auch ein oder mehrere organische Bindemittel. Zusätzlich können in der Dekorschicht farbtonmodifizierende Zusatzstoffe, organische Farbstoffe und übliche Verarbeitungshilfsmittel, wie Netzmittel, Viskositätsregulatoren, Härtungsbeschleuniger für die Bindemittel und Antihautbindungsmittel in wirksamer Menge enthalten sein. Dekorschichten mit hohem Bindemittelanteil können zwecks Erhalt einer für die Anwendung notwendigen Flexibilität des Abziehbilds zusätzlich bekannte Weichmacher, wie Phthalate, Trialkyl-phosphate und Dicarbonsäureester, in wirksamer Menge anwesend sein.

Die wesentlichen Vorteile des erfindungsgemäßen Verfahrens sowie der zur Durchführung desselben zu verwendenden Mittel bestehen darin, daß in den Mitteln nicht die Purpurpigmente an sich, sondern deren Rohstoffe eingesetzt werden und somit die sonst vorgeschaltete Pigmentherstellung entfällt. Desweiteren erlaubt die Stoffauswahl bezüglich des Glasflusses und der Goldverbindungen sowie der farbmodifizierenden Zusatzstoffe in einfacher Weise die Herstellung von purpurfarbenen Dekoren mit mehr rötlichem oder mehr bläulichem Farbton. Schließlich lassen sich die in den Mitteln zu verwendenden Glasfritten optimal auf das zu dekorierende Substrat anpassen, so daß Abplatzerscheinungen und Sprünge im Dekor vermieden werden.

Die erfindungsgemäßen Mittel zeichnen sich auch dadurch aus, daß die beim Dekorbrand erhältliche Purpurfarbe nur wenig von den Brennbedingungen beeinflußt wird. Temperaturunterschiede von 50 °C oder Brenndauerunterschiede von 1 h ergeben kaum erkennbare Farbunterschiede. Durch den Wegfall eines chemischen Reaktionsschritts zur separaten Purpurherstellung entfallen auch Maßnahmen zur Abwasserbehandlung und Edelmetallrückgewinnung aus Filtraten. Das Verfahren zur Herstellung der erfindungsgemäßen Mittel ist einfach und sicher und gewährleistet eine gleichbleibende Produktqualität.

### Beispiel 1

50 g einer feingemahlenen Glasfritte (90 % < 50 µm) werden mit 3,1 g Goldsulfid (Au₂S₃) gemischt und in einer Kugelmühle (Bloch-Rosetti) 15 Minuten homogenisiert. Das Gemisch enthält 5 Gew.-% Gold, bezogen auf die Glasfritte.

Zur Applikation wird das Glasfritte und Goldverbindung enthaltende Gemisch unter Verwendung eines Methacrylatharzes, weichmachende Ester und Kohlenwasserstofflösungsmittel enthaltenden Siebdruckmediums (Medium 80820 der Cerdec AG) in eine siebdruckfähige Paste überführt - 5 Gewichtsteile Feststoff, 4 Gewichtsteile Druckmedium. Die Paste wird mittels Siebdruck auf Porzellan aufgetragen, das Einbrennen erfolgt 1 h bei 600 °C, das erhaltene Dekor ist leuchtend purpurfarben.

### Beispiel 2

50 g einer bleifreien Glasfritte mit einem Kornspektrum von 90 % < 20 µm werden mit 0,57 g Goldcyanid gemischt und 1 h in einer Kugelmühle homogenisiert. Das Gemisch enthält 1 Gew.-% Gold, bezogen auf die Glasfritte. Das Produktgemisch wird unter Verwendung des in Beispiel 1 genannten Mediums in eine druckfähige Paste überführt; eingebrannt wird 2 h bei 600 °C. Das erhaltene Dekor ist purpurfarben.

### Beispiel 3

50 g einer bleifreien Glasfritte mit einem Kornspektrum von 90 % < 10 µm (Transparentfluß Nr. 10150 der Cerdec AG, Erweichungsbeginn 670 °C) werden mit 0,86 g Tetrachlorogoldsäure (HAuCl₄) gemischt und in der Kugelmühle homogenisiert - Goldgehalt 1 %, bezogen auf den Fluß. 5 Gewichtsteile des Gemischs werden mit 4 Gewichtsteilen des in Beispiel 1 genannten Mediums angepastet. Die Siebdruckpaste wird mittels Siebdruck auf einen Porzellanträger aufgetragen; eingebrannt wird 30 Minuten bei 800 °C. Erhalten wird ein brillantes purpurfarbenes Dekor.

### Beispiel 4

Eine bleifreie Glasfritte mit einem Teilchenspektrum von 90 % < 5 µm wird unter Verwendung von 1,47 g Kaliumdicyanoaurat (KAu(CN)₂) in einer Kugelmühle mit 2 % Gold, bezogen auf die Glasfritte, belegt. In üblicher Weise wird unter Verwendung des Methacrylat enthaltenden Mediums eine druckfähige Paste erzeugt und diese auf Porzellan aufgetragen. Zum Einbrennen wird mit einer Heizrate von 410 K/h auf 800 °C aufgeheizt und bei dieser Temperatur 12 Minuten gehalten. Das erhaltene Dekor ist leuchtend purpurfarben.

### Beispiel 5

50 g einer Hochtemperaturschnellbrandfritte mit einem Kornspektrum von 90 % < 10 µm werden in einer Na₃Au(SO₃)₂ enthaltenden wäßrigen Lösung (100 ml) aufgeschlemmt - Goldgehalt 2 Gew.-%, bezogen auf die Fritte. Das wäßrige Gemisch wird eingetrocknet und anschließend mit einem Ethylcellulose und Dipropylenglykolmonomethylether enthaltenden Druckmedium angepastet - 5 Gewichtsteile Feststoff, 4 Gewichtsteile Medium. Nach dem Auftrag der Siebdruckpaste auf Porzellan und Einbrennen - Aufheizrate 400 K/h, Brenntemperatur 800 °C, Haltezeit 0,5 h - wird ein purpurrotes Dekor erhalten.

### Beispiel 6

Ein Glasfluß auf der Basis eines Bleiborsilikats wird mit einer wäßrigen Na₃Au(SO₃)₂ enthaltenden Lösung besprüht - Goldgehalt 0,1 Gew.-%, bezogen auf die Fritte. Nach dem Trocknen wird das Produkt mit dem in Beispiel 5 genannten Medium angepastet und appliziert. Das Dekor ist bei 600 °C in 30 Minuten purpurfarben.

### Beispiel 7

Eine bleifreie Glasfritte auf der Basis SiO₂, B₂O₃, Na₂O und TiO₂, wobei der TiO₂-Gehalt 10 Gew.-% beträgt, wird mit 1 Gew.-% Gold belegt, indem die Glasfritte und Goldcyanid in der Kugelmühle homogenisiert werden. Durch trockene Applikation auf Porzellan als auch auf Keramikscherben werden nach dem Einbrennen purpurfarbene Dekore mit einem starken Blaustich erhalten. Die Farbausbildung ist bei einer maximalen Brenntemperatur von 820 °C sowie einer solchen von 870 °C praktisch identisch. Diese geringe Farbbeeinflussung in Abhängigkeit von der Brenntemperatur ist ein wesentlicher Vorteil der erfindungsgemäßen Mittel, weil sich geringe Änderungen in der Brenntemperatur praktisch nicht auf den Farbort auswirken.

### Beispiel 8

50 g eines bleifreien Glasflusses mit einem Teilchenspektrum von 90 % < 5 µm, 1,47 g Kaliumdicyanoaurat und 0,25 g Eisen(III)oxid als farbtonmodifizierender Verbindung werden gemischt und in einer Kugelmühle 2 h homogenisiert. Das erhaltene Gemisch wird mit dem in Beispiel 1 beschriebenen Druckmedium angepastet und auf Porzellan appliziert: Maximale Brenntemperatur 800 °C, Brenndauer 0,2 h. Erhalten wird ein purpurfarbenes Dekor mit einem starken Rotstich.

### Beispiel 9

Ein bleifreier Glasfluß wird durch Besprühen mit einer wäßrigen Na₃Au(SO₃)₂-Lösung mit 2 Gew.-% Gold belegt; nach dem Trocken wird Silbercarbonat in einer Menge von 0,1 Gew.-%, bezogen auf das Glasfluß und Goldverbindung enthaltende Produkt, zugemischt. Nach Homogenisierung des Dreistoffgemischs, Anpastung unter Verwendung eines Ethylcellulose enthaltenden Druckmediums und Applikation auf Porzellan wird bei 800 °C und einer Haltezeit von 0,5 h eingebrannt. Erhalten wird ein rotstichiges purpurfarbenes Dekor.

### Beispiel 10

50 g eines Hochtemperaturschnellbrandflusses, 0,86 g Tetrachlorogoldsäure und 0,5 g Titandioxid als farbtonmodifizierender Verbindung werden gemischt und in einer Kugelmühle homogenisiert. Nach Anpasten des homogenisierten Produktgemischs mit einem Methacrylat enthaltenden Druckmediums und Applikation auf Porzellan wird bei einer Aufheizrate von 400 K/h, einer maximalen Brenntemperatur von 1000 °C und einer Brenndauer von 1 h ein purpurfarbenes Dekor mit einem intensiven Blaustich erhalten.

## Patentansprüche

1. Verfahren zur Herstellung von purpurfarbenen Dekoren auf einbrennfähigen Substraten, umfassend Aufbringen eines mindestens eine Goldverbindung und einen feinteiligen Glasfluß enthaltenden Mittels auf das zu dekorierende Substrat und Brand des mit dem Mittel versehenen Substrats bei 400 bis 1050 °C,
**dadurch gekennzeichnet,**
**daß** das zum Aufbringen zu verwendende Mittel mindestens eine beim Brand zu kolloidalem Gold zersetzliche Goldverbindung, ausgenommen Goldoxid, enthält und das Gewichtsverhältnis von Gold in der Goldverbindung zu Glasfluß zwischen 1 zu 10 und 1 zu 2000 liegt.

2. Verfahren nach Anspruch 1,
**dadurch gekennzeichnet,**
**daß** das zu verwendende Mittel als Goldverbindung eine solche aus der Reihe Li-, Na- und K-dicyanoaurat(I), Goldcyanid, Tetrahalogengoldsäure, insbesondere HAuCl₄ oder Hydrate davon, Li-, Naund K-disulfitoaurat(I), Gold(III)sulfid, Gold(I)thiolate und Gold(I)aminkomplexe enthält.

3. Verfahren nach Anspruch 1 oder 2,
**dadurch gekennzeichnet,**
**daß** das zu verwendende Mittel als Glasfluß eine bleifreie Glasfritte, insbesondere eine Glasfritte mit einem Erweichungsbeginn im Bereich zwischen 450 und 700 °C, enthält.

4. Verfahren nach einem oder mehreren der Ansprüche 1 bis 3,
**dadurch gekennzeichnet,**
**daß** das zu verwendende Mittel Gold in der Goldverbindung und Glasfluß, vorzugsweise eine Glasfritte, im Gewichtsverhältnis zwischen 1 zu 20 und 1 zu 200 enthält.

5. Verfahren nach einem oder mehreren der Ansprüche 1 bis 4,
**dadurch gekennzeichnet,**
**daß** das zu verwendende Mittel zusätzlich ein flüssiges, insbesondere ein polymeres organisches Bindemittel und ein organisches oder organisch-wäßriges oder im wesentlichen rein wäßriges Lösungs- und/oder Suspensionsmittelsystem enthaltendes Medium enthält.

6. Verfahren nach einem oder mehreren der Ansprüche 1 bis 5,
**dadurch gekennzeichnet,**
**daß** das zu verwendende Mittel zusätzlich ein oder mehrere farbtonmodifizierende anorganische und/oder organische Stoffe in wirksamer Menge enthält, oder daß man einem oder mehrere der genannten farbtonmodifizierenden Stoffe auf das zuvor auf das Substrat aufgebrachte Mittel aufbringt.

7. Verfahren nach einem oder mehreren der Ansprüche 1 bis 6,
**dadurch gekennzeichnet,**
**daß** das zu verwendende Mittel zusätzlich Verarbeitungshilfsstoffe, insbesondere Stoffe zur Einstellung der rheologischen Eigenschaften pulverförmiger, flüssiger oder pastöser Mittel und/oder organische Farbstoffe zur Beurteilung des Dekors vor dem Brand, in wirksamer Menge enthält.

8. Verfahren nach einem oder mehreren der Ansprüche 1 bis 7,
**dadurch gekennzeichnet,**
**daß** das zu verwendende Mittel die zersetzliche Goldverbindung im wesentlichen in an dem Glasfluß, vorzugsweise einer Glasfritte, adsorbierter Form enthält.

9. Mittel zur Herstellung von purpurfarbenen Dekoren auf einbrennfähigen Substraten, enthaltend eine Goldverbindung und einen feinteiligen Glasfluß,
**dadurch gekennzeichnet,**
**daß** es eine beim Dekorbrand zu kolloidalem Gold zersetzliche Goldverbindung, ausgenommen Goldoxid. enthält und das Gewichtsverhältnis von Gold in der Goldverbindung zum Glasfluß zwischen 1 zu 10 und 1 zu 2000 liegt und die goldverbindung(en) im wesentlichen am Glasfluss adsorbiert sind.

10. Mittel nach Anspruch 9,
**dadurch gekennzeichnet,**
**daß** es als Goldverbindung eine solche aus der Reihe Li-, Na- und K-dicyanoaurat(I), Goldcyanid, Tetrahalogengoldsäure, insbesondere HAuCl₄ oder Hydrate davon, Li-, Na- und K-disutfitoaurat(I), Gold(III)sulfid, Gold(I)thiolate und Gold(I)aminkomplexe enthält.

11. Mittel nach Anspruch 9 oder 10,
**dadurch gekennzeichnet,**
**daß** es als Glasfluß eine bleifreie Glasfritte, insbesondere eine Glasfritte mit einem Erweichungsbeginn im Bereich zwischen 450 und 700 °C, enthält.

12. Mittel nach einem oder mehreren der Ansprüche 9 bis 11,
**dadurch gekennzeichnet,**
**daß** das Gewichtsverhältnis von Gold in der Goldverbindung zu Glasfluß, vorzugsweise einer Glasfritte, zwischen 1 zu 20 und 1 zu 200 liegt.

13. Mittel nach einem oder mehreren der Ansprüche 9 bis 12,
**dadurch gekennzeichnet,**
**daß** es die zersetzliche Goldverbindung im wesentlichen in am Glasfluß adsorbierter Form enthält.

14. Mittel nach einem oder mehreren der Ansprüche 9 bis 13,
**dadurch gekennzeichnet,**
**daß** mindestens 90 % des feinteiligen Glasflusses eine Teilchengröße von kleiner 50 µm, vorzugsweise kleiner 10 µm, aufweist.

15. Mittel nach einem oder mehreren der Ansprüche 9 bis 14,
**dadurch gekennzeichnet,**
**daß** es zusätzlich ein flüssiges Medium, vorzugsweise ein polymeres organisches Bindemittel und ein wäßriges, organisch-wäßriges oder organisches Lösungs- oder Suspensionsmittelsystem, enthält und das Mittel eine druck-, pinsel-, sprühoder tauchfähige Konsistenz aufweist.

16. Mittel nach einem oder mehreren der Ansprüche 9 bis 15,
**dadurch gekennzeichnet,**
**daß** es zusätzlich organische Farbstoffe und/oder übliche Verarbeitungshilfsstoffe für pulverförmige, pastöse oder flüssige Mittel in wirksamer Menge enthält.

17. Mittel nach einem oder mehreren der Ansprüche 9 bis 16,
**dadurch gekennzeichnet,**
**daß** es zusätzlich ein oder mehrere farbtonmodifizierende anorganische Stoffe, vorzugsweise eine Silberverbindung, ein Eisenoxid oder ein Titandioxid, und/oder organische Stoffe, insbesondere Mono-, Di- und Polysaccharide, in wirksamer Menge enthält.

18. Abziehbild zur Herstellung von purpurfarbenen Dekoren auf einbrennfähigen Substraten, umfassend in der genannten Reihenfolge einen Träger, eine wasserlösliche oder Thermotrennschicht, eine Dekorschicht und eine Filmschicht, wobei die Dekorschicht einen Glasfluß und eine Goldverbindung, ausgenommen Goldoxid, enthält,
**dadurch gekennzeichnet,**
**daß** die Dekorschicht ein Mittel gemäß einem der Ansprüche 9 bis 17 in getrocknetem Zustand enthält.

19. Verfahren zur Herstellung eines Mittels gemäß einem der Ansprüche 9 bis 17, umfassend Homogenisieren der Bestandteile des Mittels,
**dadurch gekennzeichnet,**
**daß** man zunächst entweder den Glasfluß und die zersetzliche Goldverbindung intensiv gemeinsam vermahlt oder eine wäßrige, organisch-wäßrige oder organische Lösung der Goldverbindung mit dem Glasfluß mischt und das Gemisch trocknet und dann, sofern erforderlich, den die Goldverbindung im wesentlichen adsorbiert enthaltenden Glasfluß mit weiteren Bestandteilen des Mittels zusammenbringt und homogenisiert.

## Claims

1. Process for the production of purple decoration on stovable substrates comprising application of an agent containing at least one gold compound and a finely divided glass flux onto the substrate to be decorated and firing of the substrate provided with the agent at 400 to 1,050°C,
**characterised in that**
the agent to be applied contains at least one gold compound, with the exception of gold oxide, which may be decomposed to colloidal gold on firing, and the weight ratio of gold in the gold compound to the glass flux is between 1:10 and 1:2,000.

2. Process according to claim 1,
**characterised in that**
the agent to be used contains a gold compound from the series Li, Na and K dicyanoaurate(I), gold cyanide, tetrahalogenoauric acid, in particular HAuCl₄ or hydrates thereof, Li, Na and K disulphitoaurate(I), gold(III) sulphide, gold(I) thiolates and gold(I) amine complexes.

3. Process according to claim 1 or 2,
**characterised in that**
the agent to be used contains a lead-free glass frit as the glass flux, in particular a glass frit which begins to soften in the range between 450 and 700°C.

4. Process according to one or more of claims 1 to 3,
**characterised in that**
the agent to be used contains gold in the gold compound and glass flux, preferably a glass frit, in a weight ratio of between 1:20 and 1:200.

5. Process according to one or more of claims 1 to 4,
**characterised in that**
the agent to be used additionally contains a liquid medium, in particular containing a polymeric organic binder and an organic or organic/aqueous or substantially purely aqueous solvent and/or suspending agent system.

6. Process according to one or more of claims 1 to 5,
**characterised in that**
the agent to be used additionally contains an effective quantity of one or more hue-modifying inorganic and/or organic substances, or that one or more of the stated hue-modifying substances are applied onto the agent previously applied to the substrate.

7. Process according to one or more of claims 1 to 6,
**characterised in that**
the agent to be used additionally contains an effective quantity of processing auxiliaries, in particular substances to establish the rheological properties of pulverulent, liquid or pasty agents and/or organic colorants for assessment of the decoration before firing.

8. Process according to one or more of claims 1 to 7,
**characterised in that**
the agent to be used contains the decomposable gold compound substantially in adsorbed form on the glass flux, preferably a glass frit.

9. Agent for the production of purple decoration on stovable substrates, containing a gold compound and a finely divided glass flux,
**characterised in that**
it contains a gold compound, with the exception of gold oxide, which may be decomposed to colloidal gold on firing of the decoration and the weight ratio of gold in the gold compound to the glass flux is between 1:10 and 1:2,000 and the gold compound(s) is (are) substantially adsorbed to the glass flux.

10. Agent according to claim 9,
**characterised in that**
it contains a gold compound from the series U, Na and K dicyanoaurate(I), gold cyanide, tetrahalogenoauric acid, in particular HAuCl₄ or hydrates thereof, Li, Na and K disulphitoaurate(I), gold(III) sulphide, gold(I) thiolates and gold(I) amine complexes.

11. Agent according to claim 9 or 10,
**characterised in that**
it contains a lead-free glass frit as the glass flux, in particular a glass frit which begins to soften in the range between 450 and 700°C.

12. Agent according to one or more of claims 9 to 11,
**characterised in that**
the weight ratio of gold in the gold compound to glass flux, preferably a glass frit, is between 1:20 and 1:200.

13. Agent according to one or more of claims 9 to 12,
**characterised in that**
it contains the decomposable gold compound substantially in adsorbed form on the glass flux.

14. Agent according to one or more of claims 9 to 13,
**characterised in that**
at least 90% of the finely divided glass flux has a particle size of less than 50 µm, preferably of less than 10 µm.

15. Agent according to one or more of claims 9 to 14,
**characterised in that**
it additionally contains a liquid medium, preferably a polymeric organic binder and an aqueous, organic/aqueous or organic solvent or suspending agent system and the agent has a printable, brushable, sprayable or dippable consistency.

16. Agent according to one or more of claims 9 to 15,
**characterised in that**
it additionally contains an effective quantity of organic colorants and/or customary processing auxiliaries for pulverulent, pasty or liquid agents.

17. Agent according to one or more of claims 9 to 16,
**characterised in that**
it additionally contains an effective quantity of one or more hue-modifying inorganic substances, preferably a silver compound, an iron oxide or a titanium dioxide, and/or organic substances, in particular mono-, di- and polysaccharides.

18. Transfer for the production of purple decoration on stovable substrates, comprising in the stated sequence a support, a water-soluble or thermal release layer, a decorative layer and a film layer, wherein the decorative layer contains a glass flux and a gold compound, with the exception of gold oxide,
**characterised in that**
the decorative layer contains an agent according to one of claims 9 to 17 in dry form.

19. Process for the production of an agent according to one of claims 9 to 17, comprising homogenisation of the constituents of the agent,
**characterised in that**
either the glass flux and the decomposable gold compound are first intensively ground together or an aqueous, organic/aqueous or organic solution of the gold compound is first mixed with the glass flux and the mixture is dried and then, if necessary, the glass flux containing the gold compound substantially in adsorbed form is combined with further constituents of the agent and homogenised.

## Revendications

1. Procédé de fabrication de décors de couleur pourpre sur des substrats à cuire comprenant de déposer un produit contenant au moins un composé d'or et un flux finement divisé sur le substrat à décorer et de cuire le substrat muni du produit entre 400 et 1050°C,
**caractérisé en ce que**
le produit utilisé pour le dépôt contient au moins un composé d'or décomposable en or colloïdal lors de la cuisson, sauf l'oxyde d'or, et que le rapport pondéral de l'or dans le composé d'or au flux est compris entre 1 à 10 et 1 à 2000.

2. Procédé selon la revendication 1,
**caractérisé en ce que**
le produit à utiliser contient comme composé d'or un composé de la série des dicyanoaurates (I) de Li, Na et K, du cyanure d'or, de l'acide tétrahalogénoaurique, notamment HAuCl₄ ou ses hydrates, des disulfitoaurates (I) de Li, Na et K, du sulfure d'or (III), des thiolates d'or (I) et des aminocomplexes d'or (I).

3. Procédé selon la revendication 1 ou 2,
**caractérisé en ce que**
le matériau à utiliser comme flux est une fritte de verre sans plomb, notamment une fritte de verre avec un début de ramollissement dans le domaine compris entre 450 et 700°C.

4. Procédé selon l'une des revendications 1 à 3,
**caractérisé en ce que**
le produit à utiliser contient de l'or dans le composé d'or et le flux, de préférence une fritte de verre, en rapport pondéral compris entre 1 à 20 et 1 à 200.

5. Procédé selon l'une ou plusieurs des revendications 1 à 4,
**caractérisé en ce que**
le produit à utiliser contient en plus un milieu liquide contenant notamment un liant organique polymère et un système de mise en suspension et/ou de solvant organique ou aqueux organique ou essentiellement purement aqueux.

6. Procédé selon l'une ou plusieurs des revendications 1 à 5,
**caractérisé en ce que**
le produit à utiliser contient en plus une ou plusieurs substances minérales et/ou organiques modifiant la nuance en quantité efficace, ou qu'on dépose une ou plusieurs des substances citées modifiant la nuance sur le produit déposé au préalable sur le substrat.

7. Procédé selon l'une ou plusieurs des revendications 1 à 6,
**caractérisé en ce que**
le produit à utiliser contient en plus des additifs de transformation, notamment des substances pour ajuster les propriétés rhéologiques des produits en poudre, liquides ou pâteux et/ou des colorants organiques pour évaluer le décor avant la cuisson, en quantité efficace.

8. Procédé selon l'une ou plusieurs des revendications 1 à 7,
**caractérisé en ce que**
le produit à utiliser contient le composé d'or décomposable essentiellement sous forme adsorbée sur le flux, de préférence une fritte de verre.

9. Produit de fabrication de décors de couleur pourpre sur des substrats à cuire, contenant un composé d'or et un flux finement divisé,
**caractérisé en ce que**
lors de la cuisson du décor en or colloïdal, il contient des composés d'or décomposables, sauf l'oxyde d'or, et que le rapport pondéral de l'or dans le compose d'or au flux est compris entre 1 à 10 et 1 à 2000, et que le(s) composé(s) d'or est (sont) essentiellement adsorbé(s) au flux.

10. Produit selon la revendication 9,
**caractérisé en ce qu'**
il contient comme composé d'or un composé de la série des dicyanoaurates (I) de Li, Na et K, du cyanure d'or, de l'acide tétrahalogénoaurique, notamment HAuCl₄ ou ses hydrates, des disulfitoaurates (I) de Li, Na et K, du sulfure d'or (III), des thiolates d'or (I) et des aminocomplexes d'or (I).

11. Produit selon la revendication 9 ou 10,
**caractérisé en ce qu'**
il contient comme flux est une fritte de verre sans plomb, notamment une fritte de verre avec un début de ramollissement dans le domaine compris entre 450 et 700°C.

12. Produit selon l'une ou plusieurs des revendication 9 à 11,
**caractérisé en ce que**
le rapport pondéral de l'or dans le composé d'or au flux, de préférence une fritte de verre, est compris entre 1 à 20 et 1 à 200.

13. Procédé selon l'une ou plusieurs des revendications 9 à 12,
**caractérisé en ce qu'**
il contient le composé d'or décomposable essentiellement sous forme absorbée sur le flux.

14. Produit selon l'une ou plusieurs des revendications 9 à 13,
**caractérisé en ce qu'**
au moins 90 % du flux finement divisé présente une granulométrie inférieure à 50 µm, de préférence inférieure à 10 µm.

15. Produit selon l'une ou plusieurs des revendications 9 à 14,
**caractérisé en ce qu'**
il contient en plus un milieu liquide, de préférence un liant organique polymère et un système de mise en suspension ou de solvant aqueux, aqueux-organique ou organique et que le produit présente une consistance adaptée à l'application par impression, au pinceau, par pulvérisation ou par trempage.

16. Produit selon l'une ou plusieurs des revendications 9 à 15,
**caractérisé en ce qu'**
il contient en plus des colorants organiques et/ou des additifs usuels de transformation des produits en poudre, liquide ou pâteux en quantité efficace.

17. Produit selon l'une ou plusieurs des revendications 9 à 16,
**caractérisé en ce qu'**
il contient en plus une ou plusieurs substances minérales modifiant la nuance, de préférence un composé d'argent, un oxyde de fer ou un dioxyde de titane, et/ou des substances organiques, notamment des mono-, di- et polysaccharides, en quantité efficace.

18. Décalcomanie pour réaliser des décors de couleur pourpre sur des substrats à cuire, comprenant dans l'ordre cité un support, une couche de séparation hydrosoluble ou thermofusible, une couche d'or et une couche de film, où la couche décor contient un flux et un composé d'or, sauf l'oxyde d'or,
**caractérisé en ce que**
la couche décor contient un produit selon l'une des revendications 9 à 17 à l'état sec.

19. Procédé de fabrication d'un produit selon l'une des revendications 9 à 17, comprenant d'homogénéiser les composants du produit,
**caractérisé en ce que**
soit on broie d'abord ensemble énergiquement le flux et le composé d'or décomposable soit on mélange une solution aqueuse, aqueuse-organique ou organique du composé d'or au flux et on sèche le mélange et ensuite, si c'est nécessaire, on réunit le flux contenant le composé d'or à l'état essentiellement adsorbé à d'autres composants du produit et on homogénéise.
